# EUROPÄISCHE PATENTSCHRIFT

(11) **EP 1 919 604 B1**
(45) Veröffentlichungstag und Bekanntmachung des Hinweises auf die Patenterteilung: **09.12.2009**
(21) Anmeldenummer: 06762924.6
(22) Anmeldetag: 01.08.2006
(51) Int. Cl.: B01J 2/16

(54) **VERFAHREN ZUR HARNSTOFFPELLET-HERSTELLUNG**
METHOD FOR PRODUCING UREA PELLETS
PROCEDE DE PRODUCTION DE PELLETS D'UREE

(30) Priorität: 10.08.2005 DE 102005037750
(43) Veröffentlichungstag der Anmeldung: 14.05.2008
(73) Patentinhaber: Glatt Ingenieurtechnik GmbH, D-99427 Weimar (DE)
(72) Erfinder: RÜMPLER, Karlheinz, 99425 Weimar (DE); WAND, Bernhard, 99510 Apolda (DE); JACOB, Michael, 99427 Weimar (DE); BÖBER, Reinhard, 99425 Weimar (DE); NOWAK, Reinhard, 79589 Binzen (DE)
(74) Vertreter: Maucher, Wolfgang
(86) Internationale Anmeldenummer: PCT/EP2006/007598
(87) Internationale Veröffentlichungsnummer: WO 2007/017159

(56) Entgegenhaltungen:
- EP-A1- 1 325 775
- WO-A-2004/101132
- DE-A1- 3 117 892
- DE-A1- 10 326 231
- US-A- 3 231 413

## Beschreibung

Die Erfindung betrifft ein Verfahren bzw. eine Methode zur Herstellung von Harnstoffpellets mit den im Oberbegriff des Patentanspruches 1 genannten Merkmalen.

In der Motoren- und insbesondere Fahrzeugindustrie besteht das Problem, die Abgase von Dieselmotoren, beispielsweise bei Kraftfahrzeugen, von Stickoxiden (NOₓ) zu befreien ("Denitrifikation"). Dies dient dem Umweltschutz, und nur so sind die Behördenauflagen zur Euronorm 5 und 6 zu erfüllen. Für die Entstickung derartiger Abgase mittels der SCR-Technologie (Selective Catalytic Reduction = selektive katalytische Reduktion) wird Ammoniak benötigt. Diesen in Flaschen mit den Fahrzeugen mitzuführen, ist wenig praktikabel und aus sicherheitstechnischen Gründen nicht möglich. Es wurde nach einem leicht handelbaren Ammoniakträger gesucht und dieser in Form von Harnstoff gefunden. Harnstoff liefert den für die katalytische Entfernung von Stickoxiden aus Abgasen von Dieselmotoren erforderlichen Ammoniak. Um diesen Harnstoff für die Entstickung von Dieselabgasen einsetzen zu können, muss er auch im Interesse hoher Leistungen in konzentrierter Form, also als Feststoffgranulat vorliegen, was gegenüber ebenfalls verwendbaren wässrigen Lösungen auch den Vorteil hat, dass keine Beheizung der Tanks zum Vermeiden eines Einfrierens erforderlich ist. Wegen der Notwendigkeit einer genauen Dosierung von Harnstoffgranulat in die entsprechenden Apparaturen zur Freisetzung von Ammoniak aus dem Harnstoff sind hohe qualitative Anforderungen an die Harnstoffgranulate erforderlich. Insbesondere Korngröße, Dichte und Festigkeit haben bestimmte Werte einzuhalten.

Harnstoffgranulat wird bekannterweise in der Düngemittelindustrie eingesetzt. Zur Herstellung sind Prilltürme, Wirbelschichtanlagen, Trommeltrockner u. a. Stand der Technik.

Aus der DE 29 08 136 ist ein Verfahren zur Herstellung von Harnstoffkörnern im Wirbelbett bekannt, bei dem fester, pulverförmiger Harnstoff einem Wirbelbett aufgegeben wird, der als Keime für die zu erzeugenden Harnstoffkörner dient. Diese Keime werden in der Wirbelschicht mit einer Flüssigkeit, die ein in die Harnstoffkeimpartikel einzuarbeitendes Material enthält, besprüht. Die Flüssigkeit haftet an den Harnstoffkeimpartikeln an, und die so entstandenen Materialkörner werden in der Wirbelschicht getrocknet und verfestigt.

Nachteilig bei diesem Verfahren ist, dass eine Agglomeration von Harnstoffkömern nicht vermieden und ein gleichmäßiger Aufbau des zu erzeugenden Produkts durch das Besprühen nicht erreicht werden kann, so dass Endmaterial mit unterschiedlicher und unheinheitlicher Qualität und Zusammensetzung entsteht.

Aus der DE 197 24 142 A1 ist die Herstellung von granuliertem Mischdünger unter Verwendung von Schmelze-Suspensionen bekannt. Die Schmelze-Suspensionen bestehen aus einer Mischung von aufgeschmolzenem Harnstoff und feinkörnigen anorganischen Salzen, die bei Temperaturen oberhalb des Schmelzpunktes einer an sich bekannten Wirbelschichtanlage mit klassierendem Abzug des Fertiggutes über den Wirbelschichtboden zugeführt und über Druckdüsen von unten und in Strömungsrichtung des Wirbelmediums in die Wirbelschicht eingedüst werden. Die Temperatur der zugeführten Wirbelluft zur Erzeugung und Aufrechterhaltung des Wirbelbetts und zur Aufnahme der Kristallisationswärme der zugeführten Schmelze-Suspension liegt unter der Schmelztemperatur der Schmelze, so dass eine definierte Erstarrung und Granulierung der Schmelze-Suspension in der Wirbelschicht bei Temperaturen von 95-105 °C zu Granalien, bei denen 95% des Materials eine Korngröße von 1,6-5 mm aufweisen und deren Biuretgehalt < 0,8 M-% beträgt, erfolgt. Biuret ist ein Zersetzungsprodukt des Harnstoffs, das vor allem beim Erhitzen unter Ammoniak-Abspaltung entsteht.

Aus der DE 31 17 892 A1 ist ein Strahlschichtapparat zur Herstellung von Granulaten bekannt, bei dem eine Flüssigkeit in die Feststoffströmung des Strahlschichtgranulators eingebracht wird. Der Strahlschichtapparat weist einen runden Querschnitt auf, dessen unterer Teil konisch verengt ausgebildet ist. In den zentralen konischen Teil des Strahlschichtgranulators mündet ein Gaskanal, in dem eine Düse zum Eindüsen der Flüssigkeit angeordnet ist. Durch den Gaskanal wird ein entsprechendes Gas zur Aufrechterhaltung der Strahlschicht zugeführt. das zentral zugeführte Gas reißt die über die Düse eingebrachte Flüssigkeit und einen Teil des im Strahlschichtgranulator befindlichen Materials mit. Dabei entsteht ein mehr oder weniger definierter Strahlkanal, in dem die Materialteilchen mit Flüssigkeit in Kontakt kommen können. Über den konusförmigen Boden wird das besprühte Material wieder dem Strahlkanal zugeführt, so dass es zu einem Partikelumlauf kommt. Nach Erreichen einer entsprechenden Granulatgröße werden die Partikel aus dem Strahlschichtgranulator ausgetragen.

Bei dieser Art Strahlschichtgranulator erfolgt die Zufuhr des Gases zur Erzeugung der Strahlschicht und die einzubringende Flüssigkeit an einer gemeinsamen Stelle im unteren Teil des Strahlschichtgranulators. Die zurückfallenden Partikel werden vom vertikal strömenden Fluidisierungsmittel (Luft) abgebremst, mitgerissen und nach oben umgelenkt. Es kann zu Pulsationen kommen, insbesondere bei größeren Partikelmengen, und zu unterschieldichen Partikelkonzentrationen um die Sprühdüsen herum, wodurch die Partikelbenetzung schwankend sein kann. Die relativ große freie Fläche des Gaseintritts in. Form eines Kreisringes führt zur Neigung zur Ausbildung von Luftsträhnen und somit zu nicht gleichmäßiger Anströmung. Um stabile Prozessbedingungen zu erhalten, muss der Apparat bei höheren Luftgeschwindigkeiten betrieben werden, wodurch die Fluidisierungsbedingungen nicht frei nach optimalen Prozessbedingugnen einstellbar sind. Die so erhaltenen übermäßigen Gasgeschwindigkeiten in Düsennähe führen zu einer Staubentstehung durch Sprühtrocknung bzw. Sprühkristallisation, und die entstandenen Stäube lagern sich während des Bedüsungsvorgangs auf anderen Partikeloberflächen an und reduzieren die Oberflächenqualität und die Gleichmäßigkeit (z.B. Rundheit) des Produktes. Aus diesen Gründen ist eine gleichmäßige Benetzung aller zu behandelnden Materialteilchen mit Flüssigkeit schwer bzw nicht zu realisieren. Einige Materialteilchen werden mit zuviel, andere mit zuwenig Flüssigkeit besprüht, so dass kein Endprodukt mit gleicher Korngröße und gleichem Materialaufbau erzielt werden kann. Außerdem sind die Anlagen nur zur Granulation von geringen Materialdurchsätzen geeignet, bei größeren Durchsätzen kommt es zu Problemen hinsichtlich der Erzeugung und der Aufrechterhaltung des Strahlkanals.

Weitere Schriften, wie DE 31 17 892, DE OS 102 52 734, DE 693 10 629, EP 0 026 918 und EP 1 136 465 beinhalten Verfahren, zum Teil auch zur Herstellung von Harnstoffpellets, die jedoch nicht geeignet sind, die hohen Anforderungen an für die Automobilindustrie erforderlichen Harnstoff pellets herzustellen, insbesondere auch einen sehr engen Körnungsbereich, eine hohe Sphärizität, eine glatte Oberfläche und eine geringe definierte Restfeuchte zu erzielen.

Alle bekannten Verfahren zur Herstellung von Harnstoffgranulaten haben den gemeinsamen Nachteil, dass das hergestellte Massenprodukt Harnstoffgranulat nur unzureichend oder gar nicht den Anforderungen der Abgasentstickung von Dieselmotoren entspricht. Die Granulate sind nicht hinreichend rund, haben einen breiten Korngrößenbereich und weisen keine glatte Oberfläche auf.

Aus der DE 103 22 062 A1 sind andererseits ein Verfahren und eine Anlage zum Aufbringen von Flüssigkeiten in eine Feststoffströmung eines Strahlschichtapparates bekannt. Dabei wird in eine in axialer Richtung des Reaktionsraumes des Strahlschichtapparates liegende kreisähnliche Feststoffströmung die bei der Ausbildung der Feststoffströmung benötigte Zuluft über einen im unteren Bereich und in axialer Richtung des Reaktionsraumes liegenden Spalt zugeführt. Die Flüssigkeit wird mittels einer oder mehreren Ein- und/oder Mehrstoffdüsen an einer oder mehreren Stellen in diese Feststoffströmung eingebracht. Dadurch können die Strömungsbedingungen im Bedüsungsbereich eingestellt werden, so dass die Flüssigkeit gezielt und einstellbar in die Feststoffströmung aufgebracht werden kann. Das dabei entstehende Endprodukt zeichnet sich durch annähernd gleiche Korngröße mit gleichen Materialeigenschaften aus. Durch das Aufsprühen von reinen Flüssigkeiten, Lösungen, Schmelzen oder dgl. durch ein oder mehrere Ein- und/oder Mehrstoffdüsen in die Feststoffströmung können unterschiedliche Endprodukte hergestellt werden.

Aufgabe der Erfindung ist es, ein Verfahren zur Herstellung von Harnstoffpellets zu schaffen, deren Eigenschaften die Anforderungen der Motoren- und insbesondere Fahrzeugindustrie für einen Einsatz als Abgasentstickung bei Dieselmotoren erfüllen, insbesondere unter Überwindung der oben erwähnten Grenzen und Schwächen bereits bekannter Verfahren.

Diese Aufgabe wird erfindungsgemäß überraschend gut durch die kennzeichnenden Merkmale des Patentanspruches 1, vorzugsweise in Kombination mit solchen aus einem oder mehreren der Unteransprüche, gelöst.

Dadurch, dass eine harnstoffhaltige Flüssigkeit mit einer Temperatur zwischen Umgebungstemperatur und oberhalb der Schmelztemperatur des Harnstoffes in den Bereich hoher Partikeldichte einer Bedüsungszone einer kreisähnlichen Gas-Material-Strömung eines Strahlschichtapparates auf die Partikeloberfläche des Materials aufgesprüht und in der Gasströmung bei Temperaturen bis maximal kurz unterhalb der Schmelztemperatur von reinem Harnstoff, insbesondere bis maximal 130°C, bei einem regelbaren Wärme- und Stoffübergang bei gleichzeitiger Separierung getrocknet und granuliert wird, wird ein Endmaterial mit einem engen Körnungsbereich und einer Sphärizität (nach Wadell als das Verhältnis von Oberfläche einer volumengleichen Kugel zur tatsächlichen Oberfläche definiert, nachfolgend in % angegeben) > 75% und einer definierten Restfeuchte ≤ 0,5% und insbesondere einer Korngrößenverteilung von ± 10 Prozent oder weniger um den Mittelwert derselben; vorzugsweise von ± 8 Prozent oder weniger um den Mittelwert, ja sogar bis weniger als ± 4 Prozent um den Mittelwert, erzeugt, so dass ein Zusammenbacken der hergestellten Harnstoffpellets vermieden wird. Definierte Restfeuchte bedeutet insbesondere, dass die Restfeuchte empirisch oder theoretisch vorher festgelegt werden und dann reproduzierbar erhalten werden kann.

Ein weiterer Vorteil des erfindungsgemäßen Verfahrens besteht darin, dass durch das Verfahren die Harnstoffgranulatgröße beispielsweise in einem geforderten Körnungsbereich von 1 bis 5 mm eingestellt werden kann. Die hergestellten Harnstoffpellets sind staubfrei und freifließend und weisen eine runde Geometrie mit glatter Oberfläche und geringer Rauhigkeit auf. Die Granulatkorngröße des Produktes weist vorzugsweise eine Toleranz für die Variation im Durchmesser von ≤ 10% auf. Diese in einem Strahlschichtapparat hergestellten Harnstoffpellets mit einer durch das Verfahren einstellbaren Korngröße, Dichte und Festigkeit entsprechen den Anforderungen der Fahrzeugindustrie für einen Einsatz als Abgasentstickung bei Dieselmotoren.

Als weiterer Vorteil des erfindungsgemäßen Prozesses ist der sehr einfache Aufbau der zugrundeliegenden Strahlschichtapparatur zu nennen, der eine hohe Betriebssicherheit und Störungsunempfindlichkeit mit sehr guter Reinigungsmöglichkeit verbindet und außerdem die Herstellung auch großer Mengen ermöglicht.

Vorzugsweise werden die Harnstoffpellets mit üblichen, insbesondere bei der Verwendung zur Herstellung von Ammoniak in Fahrzeugen geeigneten, d.h. unter den Bedingungen der Freisetzung des Ammoniaks aus dem Harnstoff bei der Entstickung von Abgasen vorzugsweise keine Rückstände bildenden (z.B. sich zersetzenden und/oder verdampfenden) anorganischen oder insbesondere organischen Trennmitteln, wie z.B. Wachsen, Polyolefinen, Ammoniumsalzen von Fettsäuren oder dergleichen konditioniert, insbesondere beschichtet. Dies kann in der gleichen Vorrichtung wie die Bildung der Harnstoffpellets in späteren (= weiter gegen Ende der Vorrichtung gelegenen) Abschnitten derselben oder vorzugsweise (insbesondere im Falle der Beschichtung) in ein oder mehr zusätzlichen Apparaturen (z.B. Wirbelschichtapparaturen, Strahlschichtapparaturen, Trommelbeschichtern oder dergleichen) erfolgen.

Weitere vorteilhafte Ausgestaltungen sind in den Unteransprüchen beschrieben, sie und die darin verwendeten Begriffe werden in der Beschreibung zusammen mit ihrer Wirkung erläutert. Die Erfindung betrifft auch die Verwendung einer (vorzugsweise wie vor- und nachstehend definiert aufgebauten) Strahlschichtapparatur für die Herstellung von Harnstoffpellets für die Denitrifikation von Abgasen insbesondere von Dieselmotoren, vorzugsweise nach dem genannten Verfahren.

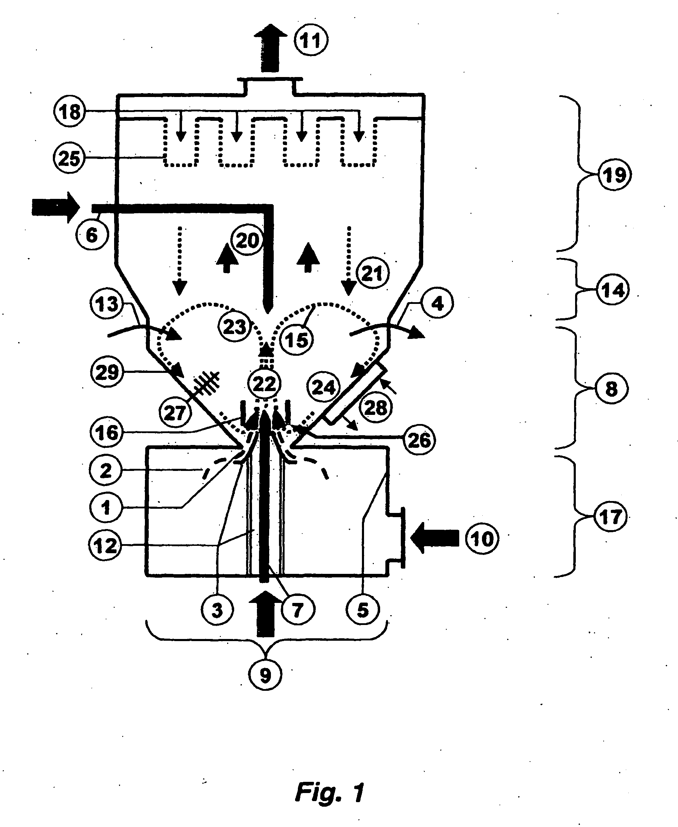

Die Erfindung wird nachfolgend anhand eines Ausführungsbeispiels, das die Erfindung illustriert, ohne sie einzuschränken, näher erläutert. In der dazugehörigen Zeichnung (Fig. 1) ist schematisch eine Anlage zur Durchführung des erfindungsgemäßen Verfahrens dargestellt - vorzugsweise ist die Anlage so vorzustellen, dass sie, aus der Ebene des Papiers davor und dahinter ragend, gleiche Form aufweist wie in dem in der Zeichnung gezeigten Querschnitt, also von oben gesehen einen etwa rechteckigen Querschnitt und eine längliche Form hat. Dies, insbesondere in Verbindung mit spaltförmigen Spaltöffnungen, führt zu einer besonders gleichmäßigen Partikelbewegung im Gesamtapparat unter Ausbildung einer Partikelwalze, mit besser gerichteter Bewegung zum Produktaustrag. Die gleichmäßigere Partikelbewegung und eine enge Verweilzeitverteilung ermöglichen ein gleichmäßigeres Wachstum der Granulate durch die Bedüsung als im Stand der Technik.

Zur Herstellung von Harnstoffpellets wird eine harnstoffhaltige Flüssigkeit mit einer Temperatur zwischen Umgebungstemperatur und oberhalb der Schmelztemperatur des Harnstoffes in den Bereich hoher Partikeldichte einer Bedüsungszone 22 einer kreisähnlichen (vorzugsweise walzenähnlichen, d.h. um eine Längsachse, die vorzugsweise etwa parallel zu ein oder mehreren Spaltöffnungen (1) liegt, erfolgenden, insbesondere nicht ringkreisförmigen) Gas-Material-Strömung 15 eines Strahlschichtapparates auf die Partikeloberfläche des Materials aufgesprüht und in der Gasströmung bei Temperaturen bis unterhalb der Schmelztemperatur von reinem Harnstoff, vorzugsweise bis maximal 130°C, bei einem regelbaren, vorzugsweise geregelten, Wärme- und Stoffübergang bei gleichzeitiger Separierung getrocknet und granuliert. Die über ein oder mehrere Sprühdüsen 7 und/oder 6 einem Prozessraum 8 des Strahlschichtapparates zugeführte harnstoffhaltige Flüssigkeit ist dabei vorzugsweise eine Harnstofflösung, eine Harnstoffsuspension, eine Harnstoffschmelze oder eine Harnstoffschmelzlösung - letzteres bezeichnet ein durch nur geringen Zusatz von Lösungsmittel, wie Wasser, gebildetes Gemisch mit gegenüber reinem Harnstoff erniedrigtem Schmelzpunkt, wobei der geringe Lösungsmittelgehalt im Endprodukt nicht erhalten bleibt, was wegen der langsameren Trocknung zu besonders gleichmäßigen Granulaten führen kann.

Zur Granulation der harnstoffhaltigen Flüssigkeit wird eine erforderliche Menge an Prozessgas 10 über mindestens (doch auch vorzugsweise nur) eine Zuluftkammer 17, hier mit etwa rechteckigem Querschnitt 9 und begrenzenden Seitenwänden 5, zugeführt. Das zugeführte Prozessgas 10 weist Temperaturen im Bereich von -20°C bis 250°C auf. In der Zuluftkammer 17 verteilt sich das Prozessgas 10 und tritt über ein oder mehrere (insbesondere zwei) (vorzugsweise längliche, etwa parallel zur Horizontalen verlaufenden) Spaltöffnungen 1 in einen Prozessraum 8 in Form von ein oder mehreren (vorzugsweise zwei) Gasstrahlen 2 ein. Der vorzugsweise horizontal in die mindestens eine Spaltöffnung 1 eintretende Prozessgasstrom wird durch ein oder mehrere (vorzugsweise zwei) Umlenkteile 3, die verstellbar sein können und die vorzugsweise etwa derart ausgeformt sind, dass sie für gebogene Leitung des Prozessgases von im Zustrombereich annähernd senkrecht zur und in Richtung auf eine Längsebene des Strahlschichtapparates durch die mindestens eine spaltförmige Spaltöffnung 1 und im Abstrombereich (Einmündebereich in den Prozessraum (8) etwa parallel zur Längsebene nach oben sorgen) vorzugsweise nach oben in den Prozessraum 8 hinein umgelenkt und strömt jeweils als eine Art Freistrahl in den Apparat hinein. Durch diese Anordnung ist ein besonders gleichmäßiger Partikelstrom einstellbar, insbesondere, wenn der Rückstrom (anders als im Stand der Technik) dadurch erfolgt, dass die Partikel von den Seitenwänden der Rücklaufzone 24 abgebremst werden und seitlich in den Gasstrom eintreten. Im weiteren kann sich der Apparatequerschnitt optional in einer Expansionszone 14 vergrößern, so dass sich die Geschwindigkeit der Prozessgasströmung nach oben hin stetig verringert. Das Gas verlässt den Apparat als Abgas 11 oberhalb der Expansionszone 14 über ein Abluftteil 19, in das optional mindestens eine Entstaubungsanlage 25, z.B. ein oder mehrere Filterpatronen und/oder Textilfilterelemente oder dergleichen, integriert werden können.

Im Prozessraum 8 befindet sich eine Menge an Harnstoff-Partikeln ("Material"), die durch den Prozessgasstrahl nach oben hin mitgerissen werden. Im oberen Bereich des Prozessraumes 8 sowie in der darüber befindlichen Expansionszone 14 nimmt die Gasgeschwindigkeit ab, so dass die aufwärts strömenden Teilchen seitlich aus dem Gasstrahl 23 heraustreten und in den Prozessraum 8 zurückfallen. Der Prozessraum 8 wird im unteren Bereich von ein oder vorzugsweise mehreren (hier zwei) geneigten Seitenwänden 29 begrenzt. Bedingt durch diese Seitenneigung werden die Teilchen unter Wirkung der Schwerkraft über eine Rücklaufzone 24 in Richtung des oder der Gaseintrittsspalten 1 befördert, wo sie anschließend wieder vom Prozessgas in den Prozessraum 8 mitgerissen werden. Vorzugsweise kann ein Differenzdruck durch bevorzugte schlitzförmige Gaseintrittsspalten 1 entsprechend den Prozessanforderungen, anders als im Stand der Technik, eingestellt werden und so die Gleichmäßigkeit des Gaseintritts und eine Reduktion eventuell vorhandener Totzonen erreicht werden. Der Anströmquerschitt kann vorzugsweise geringer als im Stand der Technik eingestellt werden, so dass die Fluidisierungsbedingungen präziser eingestellt werden können.

Durch diesen Mechanismus bildet sich eine sehr gleichförmige Feststoffzirkulation in ein oder mehreren (vorzugsweise zwei) kreisähnlichen (vorzugsweise etwa walzenähnlichen, d.h. walzenförmigen oder annähernd warzenförmigen) Gas-Material-Strömungen 15 aus. Dabei besteht jede kreisähnliche Gas-Material-Strömung 15 aus einer Aufwärtsströmung und einem Rücklauf in Richtung des Prozessgaseintrittes. Dadurch liegt auch bei sehr geringen Mengen an Teilchen im Prozessraum 8 in der Kernzone oberhalb jedes Umlenkteiles 3 eine hohe Partikeldichte vor. In diesem Bereich werden ein oder mehrere Sprühdüsen 7 angeordnet, die gleichgerichtet zum Prozessgasstrahl nach oben sprühen und zum Einbringen der feststoffhaltigen Flüssigkeit dienen. Die Materialtemperatur in der kreisähnlichen Gas-Material-Strömung 15 beträgt in einer möglichen bevorzugten Ausführungsform 40 bis 120°C.

Durch die hohe Partikelbeladung in der Kernzone ergeben sich in der Bedüsungszone 22 sehr vorteilhafte Bedingungen für den Wärme- und Stoffübergang. Weiterhin wird erreicht, dass sich die Flüssigkeit weitestgehend an den Teilchen abscheidet und diese somit gleichmäßig an den Partikeloberflächen benetzt werden. Das gleichmäßige Benetzen bei gleichzeitiger hohen Feststoffzirkulation zwischen Bedüsungsbereich und Rücklaufzone(n) 24 bewirkt, dass ein sehr gleichmäßiger Flüssigkeitsfilm auf den Materialpartikeln gebildet wird. Durch den Erstarrungsprozess erhärtet die Flüssigkeit und der Feststoff verbleibt auf der Teilchenoberfläche. Dadurch wachsen die Granulate sehr gleichförmig und homogen, was zu einer sehr engen Korngrößenverteilung und einer homogenen Partikelstruktur führt.

Das dem Prozessraum 8 zugeführte Prozessgas 10 kann einen Teil der Partikel sowie Feingut und Stäube als feststoffbeladene Abluft 20 aus dem Prozessraum 8 austragen. Zur Abscheidung dieser Teilchen können mindestens ein im Abluftteil 19 als Entstaubungsanlage 25 optional integriertes Filtersystem oder ein oder mehrere dem Apparat nachgeschaltete andersartige Entstaubungsanlagen 25 verwendet werden. Im Falle einer integrierten Entstaubungsanlage 25 können beispielsweise Druckluftimpulse 18 genutzt werden, um die zurückgehaltenen Partikeln als abgetrennten Feststoff 21 in den Prozessraum 8 zurückzuführen.

Im Unterschied zu Wirbelschichtapparaten mit integrierten Filteranlagen wird die Staubrückführung dadurch erleichtert, dass die aufwärts gerichtete Prozessgasströmung im wesentlichen örtlich begrenzt ist und somit die zurückzuführenden Teilchen außerhalb des Gasstrahles sicher absinken können. Durch die Sogwirkung in der Nähe des Gaseintrittsspaltes 1 wird dieser Mechanismus zusätzlich gefördert. Alternativ können von der Abluft abgeschiedene Teilchen in den Prozessraum 8 zurückgeführt werden. Dazu können im unteren Bereich der geneigten Seitenwände 29 ein oder mehrere Zuführungen 26 verschiedenster Art angeordnet sein. Bedingt durch die hohe Geschwindigkeit des Prozessgasstrahls in der Nähe des oder der Gaseintrittsspalten 1 werden die feinen Partikeln angesaugt und der Bedüsungszone 22 zugeführt, wo sie mit Flüssigkeit benetzt werden und am Wachstumsprozess teilnehmen.

Ein oder mehrere (vorzugsweise zwei) optional (vorzugsweise etwa parallel zu der oder den Spaltöffnungen 1) eingebaute Leitbleche 16 können in einer bevorzugten Ausführungsform den Gasstrahl stützen, verstärken den Sogeffekt und verbessern die Zuführung der Feststoffe in die Bedüsungszone 22 hinein. Eventuell auftretende Agglomerationseffekte werden minimiert, da in der Bedüsungszone 22 sehr hohe Strömungsgeschwindigkeiten und somit höhere Trennkräfte als in Wirbelschichten auftreten. Dadurch werden Teilchen separiert und wachsen zu sehr kugeligen Granulaten.

Das Strömungsprofil des Prozessgases im Prozessraum 8 bewirkt weiterhin dass von der optional integrierten Filteranlage in den Prozessraum zurückgeführte Feinpartikel nicht in die Bedüsungszone 22 zurückfallen. Dadurch werden das Verkleben von Feinpartikeln und daraus folgende Agglomeratbildungsprozesse unterbunden.

Zur kontinuierlichen Prozessführung kann der Apparat optional mit ein oder mehreren unterschiedlichen Eintragsystemen 13 für Feststoffe ausgerüstet werden. Dadurch können beispielsweise Partikel dem Prozess zugeführt werden, die durch Zerkleinerung von beispielsweise zu großen Granulaten gewonnen werden können oder/und aus zu kleinen Granulaten bestehen. Diese Teilchen dienen dann als Granulationskeime oder als Startfüllung zur Verkürzung der Inbetriebnahmezeit. Außerdem können hier ein oder mehrere Additive (wie die oben genannten Trennmittel) in fester Form in den Prozess eingeschleust werden, die in die Granulate eingebettet werden sollen.

Weiterhin kann der Apparat mit ein oder mehreren Austragsorganen 4 versehen werden, um Partikel aus dem Prozessraum 8 entnehmen zu können. Dies kann beispielsweise durch mindestens einen Überlauf und/oder durch mindestens ein volumetrisches Austragsorgan, z.B. eine Zellenradschleuse oder auch durch einen Schwerkraftsichter, z.B. einen mit Sichtgas beaufschlagten Zick-Zack-Sichter oder einen Steigrohrsichter, erfolgen.

Optional können ein oder mehrere Zerkleinerungseinrichtungen 27 im Prozessraum 8, jedoch vorzugsweise im Bereich der Rücklaufzone 24 an der oder den geneigten Seitenwänden 29 angebracht werden, um durch Zerkleinerung ausreichend Feinmaterial als Keime für den Granulatbildungsprozess zu erzeugen. Weiterhin können ein oder mehrere Rücklaufzonen 24 optional zur Positionierung von jeweils ein oder mehreren Beheizungen und/oder anderen Wärmeübertragungseinrichtungen 28 genutzt werden. Beispielsweise kann die Apparatewand doppelwandig ausgeführt sein, um diese beispielsweise unter Nutzung von flüssigen oder gasförmigen Wärmeträgern zur Beheizung oder Kühlung der Wände zu verwenden. Somit lassen sich optimale Oberflächentemperaturen einstellen, um beispielsweise Produktablagerungen zu vermeiden.

Im Prozessraum 8 oder in den darüberliegenden Apparateteilen, der Expansionszone 14 und dem Abluftteil 19, können optional ein oder mehrere Sprühdüsen 6 angeordnet werden, die vorzugsweise nach unten sprühen, aber auch teilweise nach oben sprühen können. Hier kann - neben oder statt der Bedüsung durch die Düse(n) 7 - die flüssige Formulierung eingedüst werden, um beispielsweise durch Sprühtrocknung/Sprüherstarrung im Apparat Granulationskeime zu erzeugen, insbesondere in der Anfangsphase. Alternativ können über einen Teil der Sprüheinrichtungen 6 und/oder 7 Additive in Form von organischen oder anorganischen Coatingmitteln (insbesondere Trennmitteln) oder anderen Komponenten in flüssiger Form eingesprüht und somit in die Granulatstruktur (mindestens weitgehend) homogen eingebettet werden. Wenn die Sprühdüse(n) 7 die temperaturbeaufschlagte Zuluftkammer(n) 17 passieren, können optional die flüssigkeitsführenden Teile mit Isolationen oder ein oder mehreren unterschiedlichen Kühl- oder Heizsystemen 12 versehen werden, um Schädigungen an der flüssigen Formulierung zu unterbinden.

### Anwendunasbeispiel 1: Granulation einer wässrigen Harnstofflösung

In einer kleintechnischen Strahlschichtanlage ohne Luftverteilerboden und mit einer Querschnittsfläche von 0,2 m² werden 60 kg/h einer wässrigen Harnstofflösung eingedüst und durch Sprühgranulation in Harnstoffpellets überführt. Die Zulufttemperatur beträgt 120 °C.

Die resultierenden Harnstoff pellets haben folgende Eigenschaften:
2,5 mm Durchmesser mit einer Toleranz von ±0,1 mm,
Sphärizität 92 %,
glatte Oberfläche,
Restfeuchte 0,1 %.

### Anwendungsbeispiel 2: Granulation einer Harnstoffschmelze

In einer kleintechnischen Strahlschichtanlage ohne Luftverteilerboden und mit einer Querschnittsfläche von 0,2 m² werden 50 kg/h einer Harnstoffschmelze eingedüst und durch Sprühgranulation (Sprühkristallisation) in Harnstoffpellets überführt. Die Zulufttemperatur beträgt 90 °C.

Die resultierenden Harnstoffpellets haben folgende Eigenschaften:
2,5 mm Durchmesser mit einer Toleranz von ± 0,2 mm,
Sphärizität 90 %,
glatte Oberfläche.

### Anwendungsbeispiel 3: Granulation einer Harnstoffschmelzelösung

In einer kleintechnischen Strahlschichtanlage ohne Luftverteilerboden und mit einer Querschnittsfläche von 0,2 m² werden 60 kg/h einer Harnstoffschmelzelösung eingedüst und durch Sprühgranulation (Sprühkristallisation) in Harnstoffpellets überführt. Die Flüssigkeit wird über den Schmelzpunkt erhitzt und hat einen Wassergehalt von 10%. Die Zulufttemperatur beträgt 90 °C.

Die resultierenden Harnstoffpellets haben folgende Eigenschaften:
2,5 mm Durchmesser mit einer Toleranz von ±0,1 mm,
Sphärizität 90 %,
glatte Oberfläche
Restfeuchte 0,1%.

### Anwendungsbeispiel 4: Coating der Harnstoffpellets

Die nach Anwendungsbeispiel 3 hergestellten Harnstoffpellets werden in einer kleintechnischen Strahlschichtanlage ohne Luftverteilerboden und mit einer Querschnittsfläche von 0,2 m² in einer Menge von 30 kg/h mit einem organischen Trennmittel gecoatet. Im Ergebnis kann die Verbackungsneigung der unbehändelten Harnstoffpellets vermieden werden.

## Patentansprüche

1. Verfahren zur Herstellung von Harnstoffpellets mit einer Sphärizität > 75% und einer definierten Restfeuchte ≤ 0,5%, in einem Strahlschichtapparat, bei dem eine harnstoffhaltige Flüssigkeit mit einer Temperatur zwischen Umgebungstemperatur und oberhalb der Schmelztemperatur in eine Feststoffströmung des Strahlschichtapparates eingebracht und die Feststoffströmung durch eine von unten zugeführten Gasströmung aufrecht erhalten wird, **dadurch gekennzeichnet, dass**
- die Gasströmung dem Prozessraum (8) des Strahlschichtapparates nahezu horizontal zugeführt und im Prozessraum (8) umgelenkt wird,
- den Gasstrahlen (2) im Eintrittsbereich in den Prozessraum (8) ein Materialpartikelstrom aus einer im Prozessraum (8) ausgebildeten kreisähnlichen Gas-Material-Strömung (15) seitlich zugeführt wird,
- die Strömungsgeschwindigkeit der Gas-Material-Strömung zwischen dem Eintrittsbereich der Gasstrahlen (2) in den Prozessraum (8) und einer Bedüsungszone (22) durch verstellbare Leitbleche (16) und/oder verstellbare Spaltöffnungen (1) derart erhöht wird, dass durch den Sogeffekt der Gasstrahlen (2) mehr Materialpartikel aus der kreisähnlichen Gas-Material-Strömung (15) mitgerissen werden und somit eine Strömung mit hoher Partikelbeladung regelbar eingestellt wird,
- eine harnstoffhaltige Flüssigkeit in den Bereich hoher Partikelbeladung einer Bedüsungszone (22) auf die Partikeloberfläche des Materials aufgesprüht und in der Gasströmung bei Temperaturen bis maximal unterhalb der Schmelztemperatur von reinem Harnstoff unter einem ungeregelten oder geregelten Wärme- und/oder Stoffübergang bei gleichzeitiger Separierung getrocknet und granuliert wird.

2. Verfahren nach Anspruch 1, **dadurch gekennzeichnet, dass** die harnstoffhaltige Flüssigkeit aufgesprüht und in einer Gasströmung bei Temperaturen bis maximal 130°C getrocknet wird.

3. Verfahren nach Anspruch 1 oder 2, **dadurch gekennzeichnet, dass** als harnstoffhaltige Flüssigkeit eine Harnstofflösung, eine Harnstoffsuspension, eine Harnstoffschmelze oder eine Harnstoffschmelzlösung verwendet wird.

4. Verfahren nach einem der Ansprüche 1 bis 3, **dadurch gekennzeichnet, dass** dem Strahlschichtapparat ein Prozessgas (10) mit Temperaturen zwischen -20°C und 250°C zugeführt wird.

5. Verfahren nach einem der Ansprüche 1 bis 4, **dadurch gekennzeichnet, dass** die Materialtemperatur in der kreisähnlichen Gas-Material-Strömung (15) 40°C bis 120°C gehalten wird.

6. Verfahren nach einem der Ansprüche 1 bis 5, **dadurch gekennzeichnet, dass** der Bedüsungszone (22) zur Beeinflussung der Materialeigenschaften ein oder mehrere Additive in Form von organischen oder anorganischen Trennmitteln in flüssiger Form zugeführt werden.

7. Verfahren nach einem der Ansprüche 1 bis 6, **dadurch gekennzeichnet, dass** mittels einer Entstaubungsanlage (25) aus feststoffbeladener Abluft (20) abgeschiedener Feststoff (21) der kreisähnlichen Gas-Material-Strömung (15) zugeführt wird.

8. Verfahren nach einem der Anspruche 1 bis 7, **dadurch gekennzeichnet, dass** die harnstoffhaltige Flüssigkeit und die Additive über ein oder mehrere aufwärts sprühende Sprühdüsen (7) und/oder über ein oder mehrere in beliebige Richtung sprühende Sprühdüsen (6) in die kreisähnliche Gas-Material-strömung (15) eingedüst werden.

9. Verfahren nach einem der Ansprüche 1 bis 8, **dadurch gekennzeichnet, dass** die kreisähnliche Gas-Material-Strömung (15) durch Änderung der Größe und Gestaltung von ein oder mehreren Spaltöffnungen (1) und/oder ein oder mehreren Leitblechen (16), wobei die Letzteren vorzugsweise im Prozessraum (8) vorgesehen sind, regelbar eingestellt wird.

10. Verfahren nach einem der Ansprüche 1 bis 9, **dadurch gekennzeichnet, dass** der kreisähnlichen Gas-Material-strömung (15) über ein oder mehrere Eintragssysteme (13) Feststoffmaterialteilchen zugeführt werden.

11. Verfahren nach einem der Ansprüche 1 bis 10, **dadurch gekennzeichnet, dass** in der Rücklaufzone (24) der kreisähnlichen Gas-Material-strömung (15) mittels ein oder mehrerer Zerkleinerungseinrichtungen (27) Feinmaterial als Keime für den Granulatbildungsprozess erzeugt wird.

12. Verfahren nach einem der Ansprüche 1 bis 11, **dadurch gekennzeichnet, dass** die Seitenwand oder Seitenwände (29) des Strahlschichtapparates durch ein oder mehrere wärmeübertragungseinrichtungen (28) kühl- oder beheizbar sind.

13. Verfahren nach einem der Ansprüche 1 bis 12, **dadurch gekennzeichnet, dass** die erhaltenen Harnstoffpellets in mindestens einem weiteren Schritt innerhalb eines späteren Abschnitts des Strahlschichtapparats selbst oder vorzugsweise in einem zusätzlichen Apparat mit mindestens einem anorganischen oder vorzugsweise organischen Trennmittel versehen werden.

14. Verfahren nach einem der Ansprüche 1 bis 13, **dadurch gekennzeichnet, dass** die erhaltenen Harnstoffpellets einen sehr engen Körnungsbereich von ± 10% des mittleren Körnchendurchmessers oder weniger, vorzugsweise von ± 8% oder weniger, insbesondere von ± 4% oder weniger, aufweisen.

15. Verfahren nach einem der Ansprüche 1 bis 14, **dadurch gekennzeichnet, dass** zur Beeinflussung der Materialeigenschaften ein oder mehrere Additive in Form organischer Trennmittel in flüssiger Form zugeführt werden.

16. verfahren nach einem der Ansprüche 1 bis 15, **dadurch gekennzeichnet, dass** die kreisähnliche Gas-Material-Strömung (15) durch ein oder mehrere fest eingestellte oder verstellbare Spaltöffnungen (1) und/oder durch ein oder mehrere fest eingestellte oder verstellbare Leitbleche (16) regelbar eingestellt wird, wobei ein oder mehrere Umlenkteile (3), die verstellbar sein können, jeweils im Bereich der spaltförmigen Öffnung(en) an deren zentralem, im Inneren der Anlage gelegenen Bereich vorgesehen sind, die für gebogene Leitung des Prozessgases von im Zustrombereich annähernd senkrecht zur und in Richtung auf eine Längsebene des Strahlschichtapparates durch die mindestens eine Spaltöffnung (1), vorzugsweise zwei etwa parallele Spaltöffnungen (1), und im Abstrombereich, also dem Einmündungsbereich in den Prozessraum (8), etwa parallel zur Längsachse nach oben sorgen.

17. Verfahren nach einem der Ansprüche 1 bis 16, **dadurch gekennzeichnet, dass** der Prozessraum (8), von oben gesehen, einen mindestens annähernd rechteckigen Querschnitt hat.

18. Verfahren nach einem der Ansprüche 1 bis 17, **dadurch gekennzeichnet, dass** die kreisähnliche Gas-Material-Strömung (15) eine walzenähnliche Form hat und ein oder mehrere, vorzugsweise zwei, derartige walzenähnliche Materialströmungen in der Strahlschichtapparatur vorgesehen sind.

## Claims

1. Method of producing urea pellets having a sphericity > 75% and a defined residual moisture content ≤ 0.5%, in a spouted bed apparatus, wherein a urea-containing liquid at a temperature between ambient temperature and above the melting temperature is introduced into a flow of solids of the spouted bed apparatus and the flow of solids is maintained by a flow of gas supplied from underneath, **characterised in that**
- the flow of gas is fed into the process chamber (8) of the spouted bed apparatus virtually horizontally and is deflected in the process chamber (8),
- a current of particles of material is fed laterally from a substantially circular gas and material flow (15) formed in the process chamber (8) into the gas jets (2) in the entry region into the process chamber (8),
- the flow velocity of the gas and material flow between the entry region of the gas jets (2) into the process chamber (8) and a spraying zone (22) is increased by means of adjustable guide baffles (16) and/or adjustable slot apertures (1) such that as a result of the suction effect of the gas jets (2) more particles of material are drawn out of the substantially circular flow of gas and material (15) and in this way a flow with a high particle load is created which is capable of being regulated,
- a urea-containing liquid is sprayed into the region of high particle load of a spraying zone (22) onto the particle surface of the material and is dried and granulated in the gas flow at temperatures up to at most below the melting temperature of pure urea with a regulated or unregulated transfer of heat and/or material while at the same time being separated.

2. Method according to claim 1, **characterised in that** the urea-containing liquid is sprayed on and is dried in a gas flow at temperatures of up to at most 130°C.

3. Method according to claim 1 or 2, **characterised in that** the urea-containing liquid used is a urea solution, a urea suspension, a urea melt or a urea melt solution.

4. Method according to one of claims 1 to 3, **characterised in that** a process gas (10) is fed into the spouted bed apparatus at temperatures between -20°C and 250°C.

5. Method according to one of claims 1 to 4, **characterised in that** the material temperature in the substantially circular gas and material flow (15) is maintained at 40°C to 120°C.

6. Method according to one of claims 1 to 5, **characterised in that** one or more additives in the form of organic or inorganic separating agents in liquid form are introduced into the spraying zone (22) for influencing the properties of the material.

7. Method according to one of claims 1 to 6, **characterised in that** by means of a dust removal apparatus (25) solids (21) precipitated out of solids-laden exhaust air (20) are fed into the substantially circular flow (15) of gas and material.

8. Method according to one of claims 1 to 7, **characterised in that** the urea-containing liquid and the additives are sprayed into the substantially circular gas and material flow (15) through one or more upward spraying spray nozzles (7) and/or through one or more spray nozzles (6) spraying in any desired direction.

9. Method according to one of claims 1 to 8, **characterised in that** the substantially circular flow (15) of gas and material is set to be regulatable by varying the size and configuration of one or more slot apertures (1) and/or one or more guide baffles (16), the latter preferably being provided in the process chamber (8).

10. Method according to one of claims 1 to 9, **characterised in that** particles of solid material are fed into the substantially circular gas and material flow (15) through one or more feed systems (13).

11. Method according to one of claims 1 to 10, **characterised in that** fine material, as seeds for the granulation process, is produced in the backflow zone (24) of the substantially circular gas and material flow (15) by one or more comminuting means (27).

12. Method according to one of claims 1 to 11, **characterised in that** the side wall or side walls (29) of the spouted bed apparatus can be heated or cooled by one or more heat transfer devices (28).

13. Method according to one of claims 1 to 12, **characterised in that** the urea pellets obtained are provided with at least one inorganic or preferably organic separating agent in at least one further step inside a later section of the spouted bed apparatus itself or preferably in an additional apparatus.

14. Method according to one of claims 1 to 13, **characterised in that** the urea pellets obtained have a very narrow range of particle sizes of ± 10% of the average particle diameter or less, preferably ± 8% or less, more particularly ± 4% or less.

15. Method according to one of claims 1 to 14, **characterised in that** in order to influence the material properties, one or more additives in the form of organic separating agents are added in liquid form.

16. Method according to one of claims 1 to 15, **characterised in that** the substantially circular gas and material flow (15) is set to be regulatable by means of one or more fixed or adjustable slot apertures (1) and/or by one or more fixed or adjustable guide baffles (16), while one or more deflecting members (3), which may be adjustable, are provided in the region of the slot-shaped aperture(s) at the central region thereof located within the apparatus, ensuring that the process gas is directed upwards in a curve from the inflow region substantially perpendicularly to and in the direction of a longitudinal plane of the spouted bed apparatus through the at least one slot aperture (1), preferably two substantially parallel slot apertures (1), and in the outflow region, i.e. the entry region into the process chamber (8), substantially parallel to the longitudinal axis.

17. Method according to one of claims 1 to 16, **characterised in that** the process chamber (8), viewed from above, has an at least substantially rectangular cross-section.

18. Method according to one of claims 1 to 17, **characterised in that** the substantially circular flow (15) of gas and material is roller-shaped and one or more, preferably two, such roller-shaped flows of material are provided in the spouted bed apparatus.

## Revendications

1. Procédé de fabrication de pellets d'urée ayant une sphéricité > 75 % et une humidité résiduelle définie ≤ 0,5 % dans un appareil à lit fluidisé, selon lequel un liquide contenant de l'urée à une température comprise entre la température ambiante et au-dessus de la température de fusion est introduit dans un courant de matière solide de l'appareil à lit fluidisé et le courant de matière solide est maintenu par un courant de gaz amené par le bas,
**caractérisé en ce que**
- le courant de gaz est amené à peu près horizontalement à la chambre de traitement (8) de l'appareil à lit fluidisé et dévié dans la chambre de traitement (8),
- un courant de particules de matière provenant d'un courant de gaz-matière quasi circulaire (15) formé dans la chambre de traitement (8) est amené latéralement aux jets de gaz (2) dans la zone d'entrée dans la chambre de traitement (8),
- la vitesse d'écoulement du courant de gaz-matière entre la zone d'entrée des jets de gaz (2) dans la chambre de traitement (8) et une zone d'injection (22) peut être augmentée par des tôles de guidage réglables (16) et/ou des ouvertures en forme de fente réglables (1) de manière que, par l'effet d'aspiration des jets de gaz (2), plus de particules de matière du courant de gaz-matière quasi circulaire (15) soient entraînées et donc qu'il soit possible de régler de manière contrôlée un courant possédant une charge élevée de particules,
- un liquide contenant de l'urée est pulvérisé dans la zone de charge élevée de particules d'une zone d'injection (22) sur la surface des particules de matière et, dans le courant de gaz à des températures maximales inférieures à la température de fusion de l'urée pure, déshydraté et granulé avec séparation simultanée par un transfert de chaleur et/ou de matière contrôlé ou non contrôlé.

2. Procédé selon la revendication 1, **caractérisé en ce que** le liquide contenant de l'urée est pulvérisé et déshydraté dans un courant de gaz à des températures de 130 °C au maximum.

3. Procédé selon la revendication 1 ou 2, **caractérisé en ce que** l'on utilise comme liquide contenant de l'urée une solution d'urée, une suspension d'urée, une masse fondue d'urée ou une solution de masse fondue d'urée.

4. Procédé selon l'une des revendications 1 à 3, **caractérisé en ce qu'**un gaz de procédé (10) à des températures comprises entre -20 °C et 250 °C est amené à l'appareil à lit fluidisé.

5. Procédé selon l'une des revendications 1 à 4, **caractérisé en ce que** la température de matière dans le courant de gaz-matière quasi circulaire (15) est maintenue entre 40 °C et 120 °C.

6. Procédé selon l'une des revendications 1 à 5, **caractérisé en ce qu'**un ou plusieurs additifs sous la forme d'agents séparateurs organiques ou anorganiques sont amenés à la zone d'injection (22) sous forme liquide pour influencer les propriétés de la matière.

7. Procédé selon l'une des revendications 1 à 6, **caractérisé en ce que** de la matière solide (21) séparée de l'air sortant (20) chargé en matière solide au moyen d'un système de dépoussiérage (25) est amenée au courant de gaz-matière quasi circulaire (15).

8. Procédé selon l'une des revendications 1 à 7, **caractérisé en ce que** le liquide contenant de l'urée et les additifs sont injectés dans le courant de gaz-matière quasi circulaire (15) par une ou plusieurs buses de pulvérisation (7) pulvérisant vers le haut et/ou par une ou plusieurs buses de pulvérisation (6) pulvérisant dans une direction quelconque.

9. Procédé selon l'une des revendications 1 à 8, **caractérisé en ce que** le courant de gaz-matière quasi circulaire (15) est réglé de manière contrôlée par modification de la grandeur et de la forme d'une ou plusieurs ouvertures en forme de fente (1) et/ou d'une ou plusieurs tôles de guidage (16), ces dernières étant de préférence prévues dans la chambre de traitement (8).

10. Procédé selon l'une des revendications 1 à 9, **caractérisé en ce que** des particules de matière solide sont amenées au courant de gaz-matière quasi circulaire (15) par un ou plusieurs systèmes de chargement (13).

11. Procédé selon l'une des revendications 1 à 10, **caractérisé en ce que** de la matière fine servant de germes pour le processus de formation de granulés est produite dans la zone de retour (24) du courant de gaz-matière quasi circulaire (15) au moyen d'un ou plusieurs dispositifs de broyage (27).

12. Procédé selon l'une des revendications 1 à 11, **caractérisé en ce que** la paroi latérale ou les parois latérales (29) de l'appareil à lit fluidisé peut ou peuvent être refroidie(s) ou chauffée(s) par un ou plusieurs dispositifs de transmission de chaleur (28).

13. Procédé selon l'une des revendications 1 à 12, **caractérisé en ce que**, dans au moins une étape supplémentaire, les pellets d'urée obtenus sont pourvus d'au moins un agent séparateur anorganique ou de préférence organique dans une section ultérieure de l'appareil à lit fluidisé lui-même ou de préférence dans un appareil supplémentaire.

14. Procédé selon l'une des revendications 1 à 13, **caractérisé en ce que** les pellets d'urée obtenus présentent une plage de granulométrie très étroite de ± 10 % du diamètre de grain moyen ou moins, de préférence de ± 8 % ou moins, en particulier de ± 4 % ou moins.

15. Procédé selon l'une des revendications 1 à 14, **caractérisé en ce que** pour influencer les propriétés de la matière, un ou plusieurs additifs sous la forme d'agents séparateurs organiques sont amenés sous forme liquide.

16. Procédé selon l'une des revendications 1 à 15, **caractérisé en ce que** le courant de gaz-matière quasi circulaire (15) est réglé de manière contrôlée par une ou plusieurs ouvertures en forme de fente (1) réglées de façon fixe ou réglables et/ou par une ou plusieurs tôles de guidage (16) réglées de façon fixe ou réglables, une ou plusieurs pièces de déviation (3), qui peuvent être réglables, étant prévues chaque fois dans la zone de l'ouverture ou des ouvertures en forme de fente dans leur zone centrale située à l'intérieur de l'installation, lesquelles pourvoient à la déviation vers le haut du gaz de procédé qui s'écoule à peu près perpendiculairement à et en direction d'un plan longitudinal de l'appareil à lit fluidisé dans la zone de flux entrant, à travers ladite au moins une ouverture en forme de fente (1), de préférence deux ouvertures en forme de fente (1) à peu près parallèles, et à peu près parallèlement à l'axe longitudinal dans la zone de flux sortant, donc la zone de débouché dans la chambre de traitement (8).

17. Procédé selon l'une des revendications 1 à 16, **caractérisé en ce que**, vue d'en haut, la chambre de traitement (8) a une section transversale au moins à peu près rectangulaire.

18. Procédé selon l'une des revendications 1 à 17, **caractérisé en ce que** le courant de gaz-matière quasi circulaire (15) a une forme à peu près cylindrique et qu'il est prévu un ou plusieurs, de préférence deux courants de matière à peu près cylindriques de ce genre dans l'appareil à lit fluidisé.
